# EUROPÄISCHE PATENTSCHRIFT

(11) **EP 3 139 071 B1**
(45) Veröffentlichungstag und Bekanntmachung des Hinweises auf die Patenterteilung: **04.07.2018**
(21) Anmeldenummer: 16001655.6
(22) Anmeldetag: 27.07.2016
(51) Int. Cl.: F16J 15/04, F16J 15/14, F16J 10/04, F16C 33/08, F02F 1/16

(54) **LAUFBUCHSE ZUM EINSATZ IN EIN GEHÄUSE**
BUSHING FOR INSERTION IN A HOUSING
CHEMISE DE CYLINDRE A INSERER DANS UN BOITIER

(30) Priorität: 02.09.2015 DE 102015011537
(43) Veröffentlichungstag der Anmeldung: 08.03.2017
(73) Patentinhaber: MAN Truck & Bus AG, 80995 München (DE)
(72) Erfinder: Burkhardt, Wolfgang, 91522 Ansbach (DE); Thorandt, Kurt, 91346 Wiesenttal (DE); Meyer, Dietrich, 92331 Parsberg (DE)
(74) Vertreter: v. Bezold & Partner Patentanwälte - PartG mbB

(56) Entgegenhaltungen:
- WO-A1-97/41340
- DE-A1- 10 221 731
- DE-A1-102009 043 566
- US-A- 2 818 359
- US-A- 5 537 969

## Beschreibung

Die Offenbarung betrifft eine Laufbuchse, insbesondere Zylinderlaufbuchse, zum Einsatz in ein Gehäuse. Die Offenbarung betrifft ebenfalls ein zugehöriges Gehäuse, insbesondere Motorengehäuse, und eine Bauteilanordnung aus Laufbuchse und Gehäuse.
Aus der DE 199 13 468 A1 ist eine Zylinderlaufbuchse bekannt, welche in eine Grundbohrung eines Kurbelgehäuses eingesetzt wird und welche an ihrem oberen Ende einen Bund aufweist, der mit radialem Spiel zum Kurbelgehäuse ausgebildet ist. Die Zylinderlaufbuchse weist in der Umgebung unterhalb des Bundes einen Absatz auf, der zur Grundbohrung eine Press- oder Übergangspassung darstellt. Der Bund der Zylinderlaufbuchse wird mittels Zylinderkopf und Verschraubung des Zylinderkopfs verklemmt. Der während des Arbeitsprozesses des Motors wirkende Innendruck und die Temperaturerhöhung führen zu einer Beanspruchung der Zylinderlaufbuchse, insbesondere am Übergang des rohrförmigen Teils der Zylinderlaufbuchse in den Bund der Zylinderlaufbuchse.
Aus der DE 102 21 731 A1 ist ein metallischer Buchsenabdichtring für einen Hubkolben-Verbrennungsmotor mit einem Motorblock, einem Zylinderkopf, einer Zylinderkopfdichtung sowie einer Zylinderlaufbuchse mit Buchsenbund, welcher eine die Laufbuchse umschließende Innenschulter des Motorblocks übergreift, bekannt.
Ferner sind beispielsweise aus der US 5,537,969 A, der DE 10 2009 043566 A1, der US 2,818,359 A und der WO 97/41340 A1 in einen Motorblock eingegossene und somit nichtseparate Laufbuchsen bekannt.
Eine Aufgabe der Erfindung ist es, eine Möglichkeit zu schaffen, mittels der eine Laufbuchse höheren Beanspruchungen ausgesetzt werden kann.
Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Offenbarung schafft eine Laufbuchse, insbesondere Zylinderlaufbuchse, zum Einsatz in ein Gehäuse, z. B. ein Motorengehäuse, insbesondere ein Kurbelwellengehäuse. Die Laufbuchse weist vorzugsweise einen rohrförmigen Teil und einen Buchsenbund zur Auflage an und/oder in dem Gehäuse auf und zeichnet sich insbesondere dadurch aus, dass der Buchsenbund mit einem Haftförderer zur Förderung der Haftung zwischen Laufbuchse und Gehäuse versehen ist.

Der Haftförderer dient zweckmäßig zur Reibwerterhöhung zwischen der Laufbuchse und dem Gehäuse und somit insbesondere zu einer Verringerung der Beanspruchung der Laufbuchse. Dadurch kann die Laufbuchse höheren Belastungen, insbesondere bei Innendruck, ausgesetzt werden, z. B. wäre eine Leistungssteigerung des Verbrennungsmotors durch Zünddruckerhöhung möglich.

Es ist möglich, dass der Haftförderer eine Oberflächentexturierung und/oder eine Oberflächenstruktur umfasst.

Der Haftförderer kann z. B. Erhebungen, Riefen und/oder Rillen aufweisen.

Die Erhebungen, Riefen und/oder Rillen können zweckmäßig relativ zur Mittelachse der Laufbuchse nicht radial verlaufen, insbesondere schräg, im Wesentlichen tangential und/oder im Wesentlichen in Umfangsrichtung, um sich zweckmäßig schräg oder quer zur möglichen Bewegungsrichtung der Laufbuchse bei Innendruck zu erstrecken. Damit verlaufen die Erhebungen, Riefen und/oder Rillen schräg und/oder im Wesentlichen quer, insbesondere im Wesentlichen nicht radial, zur möglichen Bewegungsrichtung der Laufbuchse. Radial zur Mittelachse der Laufbuchse wäre nach seitlich außen, also in der potentiellen Bewegungsrichtung. Diese Bewegung ist zweckmäßig zu verhindern.

Der Haftförderer kann z. B. mittels eines Strahlprozesses, wie etwa einem Sandstrahlprozess, Kugelstrahlprozess oder einem anderen geeigneten Strahlverfahren, hergestellt sein. Dadurch kann zudem die Oberfläche des Buchenbunds verfestigt werden. Um einen negativen Einfluss durch den Auslauf des Strahlprozesses im kritischen Übergangsradius zu vermeiden, kann der Radius in den Strahlprozess eingeschlossen werden.

Es ist allerdings ebenfalls möglich, dass der Haftförderer eine z. B. lose Zwischenlage zur Platzierung zwischen die Laufbuchse, insbesondere den Buchsenbund, und das Gehäuse, insbesondere den weiter unten erwähnten Lagerabschnitt, umfasst.

Der Haftförderer kann somit insbesondere ein zusätzliches, insbesondere separates, Teil zur Platzierung zwischen die Laufbuchse und das Gehäuse sein oder fester Teil der Laufbuchse und/oder des Gehäuses (z. B. Beschichtung, Oberflächenstruktur, etc.).

Die zweckmäßig lose Zwischenlage kann z. B. als Folie ausgeführt sein.

Die Zwischenlage kann ein- oder beidseitig mit zweckmäßig reibwerterhöhenden Haftfördermaßnahmen versehen sein, z. B. einer Nickelschicht mit eingebetteten Industriediamanten oder einer Wolfram-Carbid-Beschichtung.

Ebenfalls ist es möglich, dass der Haftförderer eine Haftförderbeschichtung umfasst, z. B. eine Nickelschicht mit eingebetteten Industriediamanten oder eine Wolfram-Carbid-Beschichtung. Die Haftförderbeschichtung kann zweckmäßig direkt auf den Buchsenbund und somit insbesondere ohne Zwischenlage aufgebracht sein.

Es ist möglich, dass im Montagezustand der Laufbuchse im Gehäuse die Laufbuchse in das Gehäuse verklemmt ist, so dass der Haftförderer eine Verzahnung, insbesondere Mikroverzahnung, zwischen der Laufbuchse und dem Gehäuse bildet kann.

Der Haftförderer, insbesondere die Zwischenlage, kann vorzugsweise Materialteilchen aufweisen, die einerseits die Oberflächenrauhigkeit und somit den Reibwert erhöhen als auch eine größere Härte der zu verbindenden Bauteile (Laufbuchse und Gehäuse) aufweisen. Beim Klemmen der Bauteile (Laufbuchse und Gehäuse) zueinander graben sich die Materialteilchen in die Oberfläche ein und es entsteht ein Verzahnungseffekt.

Der Haftförderer kann im Querschnitt eine im Wesentlichen L-Form darstellen.

Der Haftförderer kann zweckmäßig in die Oberfläche des Buchsenbunds eingearbeitet sein.

Der Haftförderer erstreckt sich vorzugsweise zumindest abschnittsweise über den Buchsenbund-Kehlbereich und erfasst somit zweckmäßig den (meist kritischen) Übergangsbereich zwischen dem rohrförmigen Teil und dem Buchsenbund. Der Kehlbereich kann z. B. schräg oder gerundet ausgeführt sein.

Es ist möglich, dass die Laufbuchse einen rohrförmigen Teil aufweist und der Haftförderer sich zumindest abschnittsweise über den rohrförmigen Teil erstreckt.

Es ist des Weiteren möglich, dass der Haftförderer Materialteilchen, z. B. Körner, Partikel, Fragmente etc., umfasst und die Materialteilchen in den Buchsenbund und/oder in eine Kleb- oder Dichtstoffschicht eingearbeitet (z. B. eingebettet) sind. Wie zuvor erwähnt, können die Materialteilchen im Montagezustand der Laufbuchse zweckmäßig zur Bildung einer Verzahnung dienen.

Die Materialteilchen sind zweckmäßig härter als das Material des Buchsenbunds.

Der Haftförderer ist vorzugsweise so ausgeführt, dass er sich im Montagezustand über die im Wesentlichen gesamte Kontaktfläche zwischen Laufbuchse und Gehäuse erstrecken kann.

Zu erwähnen ist, dass der Haftförderer insbesondere die Oberflächenrauigkeit erhöht.

Zu erwähnen ist ferner, dass die Laufbuchse ein zweckmäßig separates Bauteil ist.

Zu erwähnen ist außerdem, dass der Buchsenbund zweckmäßig zur Auflage auf dem Lagerabschnitt dient.

Die Offenbarung ist nicht auf eine Laufbuchse beschränkt, sondern umfasst auch ein Gehäuse, insbesondere ein Motorengehäuse, z. B. ein Kurbelwellengehäuse.
Das Gehäuse dient zur Aufnahme einer zweckmäßig wie hierin offenbarten Laufbuchse. Das Gehäuse weist einen Lagerabschnitt zur Lagerung der Laufbuchse auf und zeichnet sich insbesondere dadurch aus, dass der Lagerabschnitt mit einem Haftförderer zur Förderung der Haftung zwischen der Laufbuchse und dem Gehäuse versehen ist. Der Haftförderer kann zweckmäßig wie zuvor unter Bezugnahme auf die Laufbuchse beschrieben ausgeführt sein. Der Lagerabschnitt kann insbesondere einen Kontakt- und/oder Lagerbereich für die Laufbuchse umfassen, insbesondere zur Kontaktierung und/oder Lagerung des Buchsenbunds und/oder des rohrförmigen Teils der Laufbuchse.
Der Lagerabschnitt kann z. B. eine ringförmige und/oder im Wesentlichen L-förmige Kontakt- und/oder Lagerfläche für die Laufbuchse umfassen.
Es ist möglich, dass der Haftförderer in die Oberfläche des Lagerabschnitts eingearbeitet (z. B. eingebettet) ist.
Der Haftförderer kann z. B. Materialteilchen (z. B. Partikel, Fragmente, etc.) umfassen, die härter sind als das Material des Lagerabschnitts. Wie zuvor erwähnt, können die Materialteilchen im Montagezustand der Laufbuchse zweckmäßig zur Bildung einer Verzahnung dienen. Die Materialteilchen können insbesondere in den Lagerabschnitt und/oder eine Kleb- oder Dichtstoffschicht eingearbeitet (z. B. eingebettet) sein.
Der Haftförderer erstreckt sich vorzugsweise zumindest abschnittsweise über den Lagerabschnitt-Eckbereich und erfasst somit zweckmäßig den (meist kritischen) Übergangsbereich. Der Eckbereich kann z. B. gefast, schräg oder gerundet ausgeführt sein.

Die Erfindung umfasst eine Bauteilanordnung mit einer Laufbuchse und einem Gehäuse wie hierin offenbart.
Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Querschnittsansicht einer Laufbuchse und eines Gehäuses gemäß einer Ausführungsform der Erfindung,
- Figur 2: zeigt einen Teilbereich einer Laufbuchse und eines Gehäuse gemäß einer Ausführungsform der Erfindung, und
- Figur 3: zeigt einen Teilbereich einer Laufbuchse und eines Gehäuse gemäß einer anderen Ausführungsform der Erfindung.

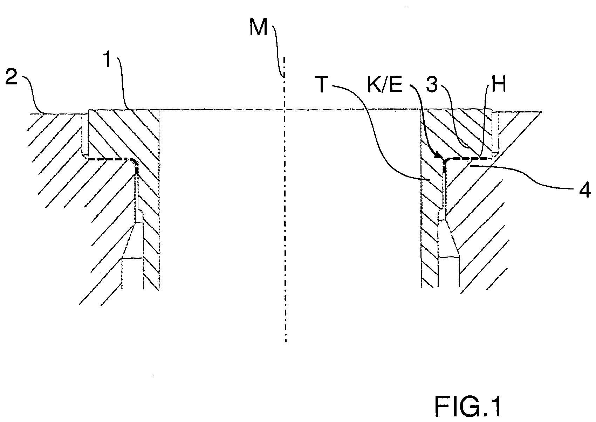

Figur 1 zeigt eine Querschnittsansicht einer Laufbuchse 1, insbesondere einer Zylinderlaufbuchse, zum Einsatz in ein Gehäuse 2, z. B. ein Motorengehäuse, insbesondere ein Kurbelwellengehäuse.
Die Laufbuchse 1 umfasst einen rohrförmigen Teil T und einen Buchsenbund 3 zur Auflage an oder in dem Gehäuse 2, insbesondere einem Lagerabschnitt 4 des Gehäuses 2. Zwischen dem Buchsenbund 3 und dem Lagerabschnitt 4 ist ein Haftförderer H zur Förderung der Haftung zwischen der Laufbuchse 1, insbesondere dessen Buchsenbund 3, und dem Gehäuse 2, insbesondere dessen Lagerabschnitt 4, angeordnet.

Im Rahmen der Offenbarung kann der Haftförderer H am Buchsenbund 3 und/oder am Lagerabschnitt 4 ausgebildet sein, z. B. als Oberflächentexturierung und/oder Oberflächenstruktur. Dabei kann der Haftförderer H z. B. Erhebungen, Riefen und/oder Rillen umfassen. Die Erhebungen, Riefen und/oder Rillen sind vorzugsweise relativ zur Mittelachse M der Laufbuchse 1 bzw. relativ zur Mittelachse M des Lagerabschnitts 4 nicht-radial ausgerichtet, so dass sie sich z. B. schräg oder quer zur möglichen Bewegungsrichtung der Laufbuchse 1 bei Innendruck erstrecken. Die Erhebungen, Riefen und/oder Rillen können mittels eines Strahlprozesses, z. B. eines Sandstrahlprozesses, Kugelstrahlprozesses oder eines anderen geeigneten Strahlprozesses hergestellt sein.
Der Haftförderer H kann ebenfalls als lose Zwischenlage zur Platzierung zwischen der Laufbuchse 1, insbesondere deren Buchsenbund 3, und dem Gehäuse 2, insbesondere dessen Lagerabschnitt 4, ausgeführt sein. Die Zwischenlage kann z. B. eine Folie sein. Die Zwischenlage und somit insbesondere die Folie kann ein- oder beidseitig eine Haftförderermaßnahme umfassen, z. B. eine Nickelschicht mit eingebetteten Industriediamanten oder eine Wolfram-Carbid-Beschichtung.
Ebenfalls kann der Haftförderer H als Haftfördererbeschichtung ausgeführt sein, die zweckmäßig auf die Laufbuchse 1, insbesondere deren Buchsenbund 3, und/oder das Gehäuse 2, insbesondere dessen Lagerabschnitt 4, aufgebracht sein kann und ebenfalls z. B. eine Nickelschicht mit eingebetteten Industriediamanten oder eine Wolfram-Carbid-Beschichtung sein kann.
Der Haftförderer H kann darüber hinaus Materialteilchen, z. B. Körner, Fragmente etc., umfassen, die in den Buchsenbund 3 und/oder den Lagerabschnitt 4 eingearbeitet sein können. Die in den Buchsenbund 3 eingearbeiteten Materialteilchen sind zweckmäßig härter als das Material des Buchsenbunds 3. Die in den Lagerabschnitt 4 eingearbeiteten Materialteilchen sind zweckmäßig härter als das Material des Lagerabschnitts 4.
Bezugszeichen K kennzeichnet einen Buchsenbund-Kehlbereich K, während Bezugszeichen E einen Lagerabschnitt-Eckbereich E kennzeichnet.
Der Haftförderer H kann sich über den Buchsenbund-Kehlbereich K erstrecken und somit auch andere Bereiche als den Buchsenbund 3 zur Kontaktierung mit dem Gehäuse 2 umfassen.
Der Haftförderer H kann sich ferner über den Lagerabschnitt-Eckbereich E erstrecken und somit auch andere Bereiche als den Lagerabschnitt 4 zur Kontaktierung mit der Laufbuchse 1 umfassen.

Im Rahmen der Offenbarung ist es somit möglich, dass die Laufbuchse 1 einen Haftförderer H aufweist, das Gehäuse 2 einen Haftförderer H aufweist und/oder eine lose Haftförderzwischenlage H zur Platzierung zwischen Laufbuchse 1 und Gehäuse 2 vorgesehen ist.
Im Montagezustand erzeugt der Haftförderer H zwischen der Laufbuchse 1 und dem Gehäuse 2 zweckmäßig eine Mikroverzahnung und somit eine Erhöhung des Reibwerts.

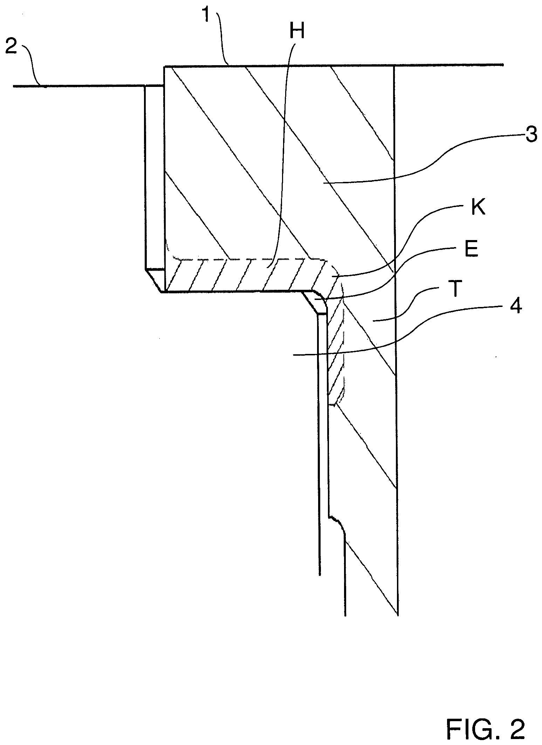

Figur 2 zeigt einen Teilbereich einer Laufbuchse 1 und eines Gehäuses 2 gemäß einer Ausführungsform der Erfindung.
Der Haftförderer H ist im Strahlprozess hergestellt. Der schraffierte Bereich des Haftförderers H kennzeichnet die beeinflusste Bauteiltiefe. Der Haftförderer H erstreckt sich vom Buchsenbund 3 über den Buchsenbund-Kehlbereich K zum rohrförmigen Teil T und ist im Querschnitt vorzugsweise im Wesentlichen L-förmig ausgebildet.

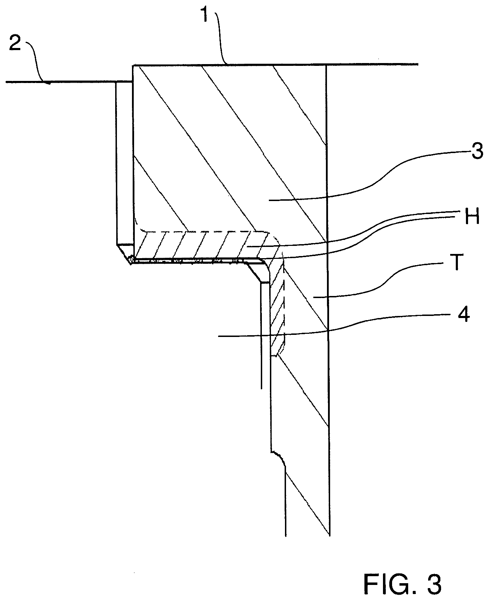

Figur 3 zeigt einen Teilbereich einer Laufbuchse 1 und eines Gehäuses 2 gemäß einer anderen Ausführungsform der Erfindung.

Eine Besonderheit der in Figur 3 gezeigten Ausführungsform ist, dass die Laufbuchse 1 zusätzlich zu dem Haftförderer H aus Figur 2 einen als Haftförderbeschichtung oder lose Haftförderzwischenlage ausgeführten Haftförderer H umfasst.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Laufbuchse, insbesondere Zylinderlaufbuchse
- 2: Gehäuse, vorzugsweise Motorengehäuse, insbesondere Kurbelwellengehäuse
- 3: Buchsenbund, insbesondere Auflagebund
- 4: Lagerabschnitt, insbesondere Auflageabschnitt
- H: Haftförderer
- K: Buchsenbund-Kehlbereich
- E: Lagerabschnitt-Eckbereich
- M: Mittelachse der Laufbuchse und/oder des Lagerabschnitts

## Patentansprüche

1. Bauteilanordnung, mit:
einer Laufbuchse (1), insbesondere Zylinderlaufbuchse; und
einem Gehäuse (2), insbesondere Motorengehäuse,
wobei:
die Laufbuchse (1) in das Gehäuse (2) eingesetzt ist;
die Laufbuchse (1) als separates Bauteil ausgeführt ist;
die Laufbuchse (1) einen Buchsenbund (3) zur Auflage an oder in dem Gehäuse (2) aufweist;
das Gehäuse (2) einen Lagerabschnitt (4) zur Lagerung der Laufbuchse (1) aufweist; der Buchsenbund (3) mit einem Haftförderer (H) zur Förderung der Haftung zwischen der Laufbuchse (1) und dem Gehäuse (2) versehen ist und/oder der Lagerabschnitt (4) mit einem Haftförderer (H) zur Förderung der Haftung zwischen der Laufbuchse (1) und dem Gehäuse (2) versehen ist, **dadurch gekennzeichnet, dass** der Haftförderer (H) in die Oberfläche des Buchsenbunds (3) und/oder in die Oberfläche des Lagerabschnitts (4) eingearbeitet ist.

2. Bauteilanordnung nach Anspruch 1, **dadurch gekennzeichnet, dass** der Haftförderer (H) eine Oberflächentexturierung und/oder Oberflächenstruktur umfasst.

3. Bauteilanordnung nach Anspruch 1 oder 2, **dadurch gekennzeichnet, dass** der Haftförderer (H) Erhebungen, Riefen und/oder Rillen umfasst.

4. Bauteilanordnung nach Anspruch 3, **dadurch gekennzeichnet, dass** die Erhebungen, Riefen und/oder Rillen relativ zur Mittelachse (M) der Laufbuchse (1) nicht radial verlaufen, insbesondere schräg, im Wesentlichen tangential und/oder im Wesentlichen in Umfangsrichtung verlaufen.

5. Bauteilanordnung nach einem der vorhergehenden Ansprüche, **dadurch gekennzeichnet, dass** der Haftförderer (H) mittels eines Strahlprozesses hergestellt ist.

6. Bauteilanordnung nach einem der vorhergehenden Ansprüche, **dadurch gekennzeichnet, dass** der Haftförderer (H) eine zweckmäßig lose Zwischenlage zur Platzierung zwischen die Laufbuchse (1), insbesondere den Buchsenbund (3), und das Gehäuse (2) umfasst, und die Zwischenlage vorzugsweise eine Folie umfasst.

7. Bauteilanordnung nach Anspruch 6, **dadurch gekennzeichnet, dass** die Zwischenlage ein- oder beidseitig eine Haftfördermaßnahe umfasst, vorzugsweise eine Nickelschicht mit eingebetteten Industrie-Diamanten oder eine Wolfram-Carbid-Beschichtung.

8. Bauteilanordnung nach einem der vorhergehenden Ansprüche, **dadurch gekennzeichnet, dass** der Haftförderer (H) eine Haftförderbeschichtung umfasst, vorzugsweise eine Nickelschicht mit eingebetteten Industrie-Diamanten oder eine Wolfram-Carbid-Beschichtung.

9. Bauteilanordnung nach einem der vorhergehenden Ansprüche, **dadurch gekennzeichnet, dass** der Haftförderer (H) zur Ausbildung einer Mikroverzahnung zwischen der Laufbuchse (1) und dem Gehäuse (2) ausgebildet ist.

10. Bauteilanordnung nach einem der vorhergehenden Ansprüche, **dadurch gekennzeichnet, dass** der Haftförderer (H) im Querschnitt eine im Wesentlichen L-Form darstellt.

11. Bauteilanordnung nach einem der vorhergehenden Ansprüche, **dadurch gekennzeichnet, dass** der Haftförderer (H) sich zumindest abschnittsweise über einen Buchsenbund-Kehlbereich (K) erstreckt und/oder die Laufbuchse (1) einen rohrförmigen Teil (T) aufweist und der Haftförderer (H) sich zumindest abschnittsweise über den rohrförmigen Teil (T) erstreckt.

12. Bauteilanordnung nach einem der vorhergehenden Ansprüche, **dadurch gekennzeichnet, dass** der Haftförderer (H) Materialteilchen umfasst, die härter sind als das Material des Buchsenbunds (3).

13. Bauteilanordnung nach Anspruch 12, **dadurch gekennzeichnet, dass** die Materialteilchen in den Buchsenbund (3) oder eine Kleb- oder Dichtstoffschicht eingearbeitet sind.

14. Bauteilanordnung nach einem der vorherigen Ansprüche, **dadurch gekennzeichnet, dass** der Haftförderer (H) Materialteilchen umfasst, die härter sind als das Material des Lagerabschnitts (4).

15. Bauteilanordnung nach Anspruch 14, **dadurch gekennzeichnet, dass** die Materialteilchen in den Lagerabschnitt (4) oder eine Kleb- oder Dichtstoffschicht eingearbeitet sind.

16. Bauteilanordnung nach einem der vorherigen Ansprüche, **dadurch gekennzeichnet, dass** der Haftförderer (H) sich zumindest abschnittsweise über einen Lagerabschnitt-Eckbereich (E) erstreckt.

## Claims

1. A component arrangement, having:
a liner (1), in particular a cylinder liner; and
a housing (2), in particular an engine housing:
the liner (1) being inserted into the housing (2);
the liner (1) being configured as a separate component;
the liner (1) having a lining flange (3) for bearing on or in the housing (2);
the housing (2) having a bearing section (4) for mounting the liner (1); the liner flange (3) being provided with an adhesion promoter (H) for promoting the adhesion between the liner (1) and the housing (2), and/or the bearing section (4) being provided with an adhesion promoter (H) for promoting the adhesion between the liner (1) and the housing (2), **characterized in that** the adhesion promoter (H) is incorporated into the surface of the liner flange (3) and/or into the surface of the bearing section (4).

2. The component arrangement according to Claim 1, **characterized in that** the adhesion promoter (H) comprises a surface texture and/or surface structure.

3. The component arrangement according to Claim 1 or 2, **characterized in that** the adhesion promoter (H) comprises elevations, grooves and/or channels.

4. The component arrangement according to Claim 3, **characterized in that** the elevations, grooves and/or channels do not run radially relative to the centre axis (M) of the liner (1), and run, in particular, obliquely, substantially tangentially and/or substantially in the circumferential direction.

5. The component arrangement according to one of the preceding claims, **characterized in that** the adhesion promoter (H) is produced by means of a blasting process.

6. The component arrangement according to one of the preceding claims, **characterized in that** the adhesion promoter (H) comprises an expediently loose intermediate layer for positioning between the liner (1), in particular the liner flange (3), and the housing (2), and the intermediate layer preferably comprises a film.

7. The component arrangement according to Claim 6, **characterized in that** the intermediate layer comprises an adhesion promoting measure on one side or on both sides, preferably a nickel layer with embedded industrial diamonds, or a tungsten carbide coating.

8. The component arrangement according to one of the preceding claims, **characterized in that** the adhesion promoter (H) comprises an adhesion promoting coating, preferably a nickel layer with embedded industrial diamonds, or a tungsten carbide coating.

9. The component arrangement according to one of the preceding claims, **characterized in that** the adhesion promoter (H) is configured for configuring a microserration between the liner (1) and the housing (2) .

10. The component arrangement according to one of the preceding claims, **characterized in that** the adhesion promoter (H) has a substantially L-shape in cross section.

11. The component arrangement according to one of the preceding claims, **characterized in that** the adhesion promoter (H) extends at least in regions over a liner flange throat region (K) and/or the liner (1) has a tubular part (T) and the adhesion promoter (H) extends at least in sections over the tubular part (T).

12. The component arrangement according to one of the preceding claims, **characterized in that** the adhesion promoter (H) comprises material particles which are harder than the material of the liner flange (3).

13. The component arrangement according to Claim 12, **characterized in that** the material particles are incorporated into the liner flange (3) or an adhesive or sealant layer.

14. The component arrangement according to one of the preceding claims, **characterized in that** the adhesion promoter (H) comprises material particles which are harder than the material of the bearing section (4).

15. The component arrangement according to Claim 14, **characterized in that** the material particles are incorporated into the bearing section (4) or an adhesive or sealant layer.

16. The component arrangement according to one of the preceding claims, **characterized in that** the adhesion promoter (H) extends at least in sections over a bearing section corner region (E).

## Revendications

1. Système de pièces de construction comprenant :
une chemise (1), en particulier une chemise de cylindre ; et
un boîtier (2), en particulier un carter de moteur,
dans lequel :
la chemise (1) est insérée dans le boîtier (2) ;
la chemise (1) est réalisée sous forme d'une pièce séparée ;
la chemise (1) présente une collerette (3) pour s'appuyer au niveau du ou dans le boîtier (2) ;
le boîtier (2) présente une section de palier (4) pour l'appui de la chemise (1) ; la collerette (3) est pourvue d'un promoteur d'adhérence (H) pour favoriser l'adhérence entre la chemise (1) et le boîtier (2) et/ou la section de palier (4) est pourvue d'un promoteur d'adhérence (H) pour favoriser l'adhérence entre la chemise (1) et le boîtier (2), **caractérisé en ce que** le promoteur d'adhérence (H) est intégré dans la surface de la collerette (3) et/ou dans la surface de la section de palier (4).

2. Système de pièces de construction selon la revendication 1, **caractérisé en ce que** le promoteur d'adhérence (H) comprend une texturation de surface et/ou une structure de surface.

3. Système de pièces de construction selon la revendication 1 ou 2, **caractérisé en ce que** le promoteur d'adhérence (H) comprend des protubérances, des cannelures et/ou des rainures.

4. Système de pièces de construction selon la revendication 3, **caractérisé en ce que** les protubérances, cannelures et/ou rainures ne s'étendent pas radialement par rapport à l'axe médian (M) de la chemise (1) et s'étendent en particulier obliquement, sensiblement tangentiellement et/ou sensiblement dans le sens circonférentiel.

5. Système de pièces de construction selon une des revendications précédentes, **caractérisé en ce que** le promoteur d'adhérence (H) est fabriqué par un procédé de projection.

6. Système de pièces de construction selon une des revendications précédentes, **caractérisé en ce que** le promoteur d'adhérence (H) comprend une couche intermédiaire judicieusement indépendante destinée à être placée entre la chemise (1), en particulier la collerette (3) de la chemise, et le boîtier (2) et que la couche intermédiaire comprend de préférence un film.

7. Système de pièces de construction selon la revendication 6, **caractérisé en ce que** la couche intermédiaire comprend d'un côté ou des deux côtés un système promoteur d'adhérence, de préférence une couche de nickel avec des diamants industriels incrustés ou un revêtement de carbure de tungstène.

8. Système de pièces de construction selon une des revendications précédentes, **caractérisé en ce que** le promoteur d'adhérence (H) comprend un revêtement promoteur d'adhérence, de préférence une couche de nickel avec des diamants industriels incrustés ou un revêtement de carbure de tungstène.

9. Système de pièces de construction selon une des revendications précédentes, **caractérisé en ce que** le promoteur d'adhérence (H) est conçu pour constituer une micro-denture entre la chemise (1) et le boîtier (2).

10. Système de pièces de construction selon une des revendications précédentes, **caractérisé en ce que** le promoteur d'adhérence (H) présente une forme sensiblement en L en section transversale.

11. Système de pièces de construction selon une des revendications précédentes, **caractérisé en ce que** le promoteur d'adhérence (H) s'étend au moins par sections sur une zone de gorge de la collerette (K) et/ou que la chemise (1) présente une pièce de forme tubulaire (T) et que le promoteur d'adhérence (H) s'étend au moins par sections sur la pièce de forme tubulaire (T).

12. Système de pièces de construction selon une des revendications précédentes, **caractérisé en ce que** le promoteur d'adhérence (H) comprend des particules de matière qui sont plus dures que la matière de la collerette (3).

13. Système de pièces de construction selon la revendication 12, **caractérisé en ce que** les particules de matière sont intégrées dans la collerette (3) ou dans une couche de colle et de matériau d'étanchéité.

14. Système de pièces de construction selon une des revendications précédentes, **caractérisé en ce que** le promoteur d'adhérence (H) comprend des particules de matière qui sont plus dures que la matière de la section de palier (4).

15. Système de pièces de construction selon la revendication 14, **caractérisé en ce que** les particules de matière sont intégrées dans la section de palier (4) ou dans une couche de colle et de matériau d'étanchéité.

16. Système de pièces de construction selon une des revendications précédentes, **caractérisé en ce que** le promoteur d'adhérence (H) s'étend au moins par sections sur une zone d'angle de la section de palier (E).
